# EUROPEAN PATENT SPECIFICATION

(11) **EP 2 851 682 B1**
(45) Date of publication and mention of the grant of the patent: **25.03.2020**
(21) Application number: 14186190.6
(22) Date of filing: 24.09.2014
(51) Int. Cl.: G01N 30/12, G01N 30/88

(54) **Analyser and method for extracting and automatically detecting benzene and limonene**
Messgerät und Verfahren zum Extrahieren und automatischen Detektieren von Benzen und Limonen
Appareil de mesure et procédé pour l'extraction et la détection automatique de benzène et limonène

(30) Priority: 24.09.2013 IT MO20130260
(43) Date of publication of application: 25.03.2015
(73) Proprietor: Piovan S.P.A., 30036 Santa Maria di Sala (VE) (IT)
(72) Inventor: Bellio, Enrico, 31050 Ponzano V.to (Treviso) (IT)
(74) Representative: Pandolfi, Paolo

(56) References cited:
- EP-A2- 0 633 469
- DE-A1- 4 109 858
- US-A- 5 236 593
- US-A- 5 342 786
- US-A- 5 588 988
- US-A- 5 970 804
- S Schmidt ET AL: "Dynamic Headspace Enrichment/Reinjection for Open Tubular GC/FTIR Analysis of Volatiles in Polymers", Journal of High Resolution Chromatography & Chromatography Communications, 1 March 1988 (1988-03-01), pages 242-247, XP055097151, DOI: 10.1002/jhrc.1240110305 Retrieved from the Internet: URL:http://onlinelibrary.wiley.com/store/1 0.1002/jhrc.1240110305/asset/1240110305_ft p.pdf?v=1&t=hqngjwd3&s=0bc382add1ff2efe6ca 73d8144391ebcadb1acaf [retrieved on 2014-01-20]
- RYMEN T ET AL: "Home-made thermal desorption unit as an aid in gas chromatographic/mass spectormetric identification of environmental pollutants", ANALYTICA CHIMICA ACTA, ELSEVIER, AMSTERDAM, NL, vol. 196, 1 January 1987 (1987-01-01), pages 85-93, XP026591234, ISSN: 0003-2670, DOI: 10.1016/S0003-2670(00)83073-1 [retrieved on 1987-01-01]
- G Fernandez-Martinez ET AL: "Determination of volatile organic compounds in coal, fly ash and slag samples by direct thermal desorption/GC/MS", Analusis, vol. 28, no. 10, 18 December 2000 (2000-12-18), pages 953-959, XP055398638, DOI: https://doi.org/10.1051/analusis:2000161
- STATHEROPOULOS M ET AL: "A study of volatile organic compounds evolved in urban waste disposal bins", ATMOSPHERIC ENVIRONMENT, PERGAMON, GB, vol. 39, no. 26, 1 August 2005 (2005-08-01), pages 4639-4645, XP027740794, ISSN: 1352-2310 [retrieved on 2005-08-01]
- Samanta Fabris ET AL: "A method to determine volatile contaminants in polyethylene terephthalate (PET) packages by HDC-GC-FID and its application to post-consumer materials", Ciênc. Tecnol. Aliment., 1 January 2010 (2010-01-01), pages 1046-1055, XP055398442, DOI: 10.1590/S0101-20612010000400033 Retrieved from the Internet: URL:http://www.scielo.br/pdf/cta/v30n4/v30 n4a33.pdf [retrieved on 2017-08-14]
- RIGANAKOS K A ET AL: "Effects of ionizing radiation on properties of monolayer and multilayer flexible food packaging materials", RADIATION PHYSICS AND CHEMISTRY, ELSEVIER, AMSTERDAM, NL, vol. 54, no. 5, 1 May 1999 (1999-05-01), pages 527-540, XP004161329, ISSN: 0969-806X, DOI: 10.1016/S0969-806X(98)00263-1
- GOGUS F ET AL: "Analysis of roasted and unroasted Pistacia terebinthus volatiles using direct thermal desorption-GCxGCTOF/MS", FOOD CHEMISTRY, ELSEVIER LTD, NL, vol. 129, no. 3, 1 May 2011 (2011-05-01), pages 1258-1264, XP028099719, ISSN: 0308-8146, DOI: 10.1016/J.FOODCHEM.2011.05.003 [retrieved on 2011-05-15]

## Description

The invention refers to an analyser and to a method for extracting and automatically detecting benzene and limonene contained in a polymer, a resin in granular form, a preform, or a recycled polyethylene terephthalate (PET) in granular form.

Resorting to a chemical analysis laboratory to measure the benzene and limonene in a sample is known. A method used in the laboratory consists of preparing the sample to be analysed by cryogenic grinding and carrying out a gas chromatography analysis with headspace technique.

Cryogenic grinding cools the sample in liquid nitrogen and subsequently grinds the sample, for example by means of a mill of the Wiley type. Cryogenic grinding has to be carried out by qualified technical staff. Also, cryogenic grinding is a laborious procedure that takes a long time to be performed. This, on the one hand, increases analysis costs, and on the other reduces the number of analyses that can be carried out in a day, typically from one to three, which entails lack of availability in real time of the analysis results, and thus, in the event of non-conformity of the sample, leads to large quantities of product being rejected. Cryogenic grinding is further difficult to standardise and often subject to human error, this greatly influencing the result of the analysis.

Also gas chromatography analysis with headspace technique is currently carried out in a laboratory using a laboratory gas chromatograph by qualified and experts in gas chromatography technical staff. Headspace technique removes the vapours released from a sample placed in a vial at a set temperature for a certain interval of time, these vapours being then sent to a gas chromatography column to be separated. The laboratory gas chromatograph requires particularly long and complicated calibration because preparing a series of standard mixtures with different concentrations of benzene and limonene is required to plot a calibration line. Further, in the laboratory gas chromatographs currently used for this type of analysis, a "split" injecting technique is used for injecting the sample in the column, in which only part of the sample to be analysed, suitably diluted with a carrier gas, named "carrier", is injected into the gas chromatography column to be separated. The remaining part is discharged outside via a vent. Nevertheless, the ratio between the sample to be analysed and the carrier can frequently undergo variations, which entails the need to calibrate the laboratory gas chromatograph with greater frequency.

In use, a sample is taken from the production line that is sent to the laboratory where the aforesaid analysis is carried out in a time that is not compatible, for the aforesaid reasons, with production time.

The article S Schmidt ET AL: "Dynamic Headspace Enrichment/Reinjection for Open Tubular GC/FTIR Analysis of Volatiles in Polymers", Journal of High Resolution Chromatography & Chromatography Communications, 1 March 1988 (1988-03-01), pages 242-247, discloses an analytical system for the analysis of volatiles entrained in polymers. This system is based on a thermal desorption oven connected to a trap. After enrichment of headspace vapor, trapped material is reinjected and analyzed by open tubular gas chromatography/Fourier transform infrared spectroscopy, OTGC/FTIR.

US5588988A discloses a thermal desorption device for a gas chromatograph.

The article entitled *"*Home-made thermal desorption unit as an aid in gas chromatographic/mass spectormetric identification of environmental pollutants" by Rimen et al., discloses a home-made thermal desorption unit.

DE4109858A1 describes a method for detecting substances which are emitted from solid or liquid substances, by means of a gas chromatograph.

US5342786A discloses a method for detecting the presence of a vapor of an alkyl ester of phosphoric acid, particularly tributylphosphate, in ambient air.

EP0633469A2 describes methods and apparatus for conducting gas chromatography.

US5236593A discloses an apparatus and a method for on-line coupled liquid chromatography and gas chromatography analysis.

US5970804A provides methods and apparatus for determining the presence or absence of a specific constituent in a mixture.

G Fernandez-Martinez ET AL: "Determination of volatile organic compounds in coal, fly ash and slag samples by direct thermal desorption/GC/MS", Analusis, vol. 28, no. 10, 18 December 2000 (2000-12-18), pages 953-959, discloses an analyser configured for detecting benzene and limonene in a coal sample, based on thermal desorption, a cold trap and GC-MS.

STATHEROPOULOS M ET AL: "A study of volatile organic compounds evolved in urban waste disposal bins", ATMOSPHERIC ENVIRONMENT, PERGAMON, GB, vol. 39, no. 26, 1 August 2005 (2005-08-01), pages 4639-4645, discloses an analyser configured for detecting benzene and limonene in a waste sample based on thermal desorption, a cryo trap capillary and GC-MS.

Samanta Fabris ET AL: "A method to determine volatile contaminants in polyethylene terephthalate (PET) packages by HDC-GC-FID and its application to post-consumer materials", Ciênc. Tecnol. Aliment., 1 January 2010 (2010-01-01), pages 1046-1055, discloses an analyser configured for detecting limonene in a sample of recycled PET based on headspace sampling, thermal desorption and GC-FID.

RIGANAKOS K A ET AL: "Effects of ionizing radiation on properties of monolayer and multilayer flexible food packaging materials", RADIATION PHYSICS AND CHEMISTRY, ELSEVIER, AMSTERDAM, NL, vol. 54, no. 5, 1 May 1999 (1999-05-01), pages 527-540, discloses an analyser based on headspace sampling, thermal desorption and GC-MS. In one example benzene/benzol is detected in a LDPE sample and in another example limonene is detected in a sample of EVAc.

An object of the present invention is to provide an analyser and a method for extracting and automatically detecting benzene and limonene contained in a polymer in granular form, a resin in granular form, a preform, or a recycled polyethylene terephthalate (PET) in granular form. A further object is to provide an analyser and a method for extracting and automatically detecting benzene and limonene contained in a polymer, a resin in granular form, a preform, or a recycled polyethylene terephthalate (PET) in granular form, that do not require the use of qualified technical staff.

Yet another object is to provide an analyser and a method for extracting and automatically detecting benzene and limonene contained in a polymer, a resin in granular form, a preform, or a recycled polyethylene terephthalate (PET) in granular form, that enable a greater number of daily analyses to be carried out than with the prior art.

A further object achieved by the present invention is to enable an online check to be made in the productive process of preform moulding systems to enable the process parameters to be adapted continuously.

Yet another object is to provide an analyser for extracting and automatically detecting benzene and limonene contained in a polymer, a resin in granular form, a preform, or a recycled polyethylene terephthalate (PET) in granular form, that can be installed in a process environment. Still another further object is to provide an analyser for extracting and automatically detecting benzene and limonene from a sample that is easy and fast to calibrate.

Another still further object is to provide an analyser and a method for extracting and automatically detecting benzene and limonene contained in a polymer, a resin in granular form, a preform, or a recycled polyethylene terephthalate (PET) in granular form, that enable safer and more repeatable results to be obtained than those obtained with the prior art.

These and still other objects are achieved by an analyser and by a method for extracting and automatically detecting benzene and limonene contained in a polymer, a resin in granular form, a preform, or a recycled polyethylene terephthalate (PET) in granular form, according to one or more of the claims set out below.

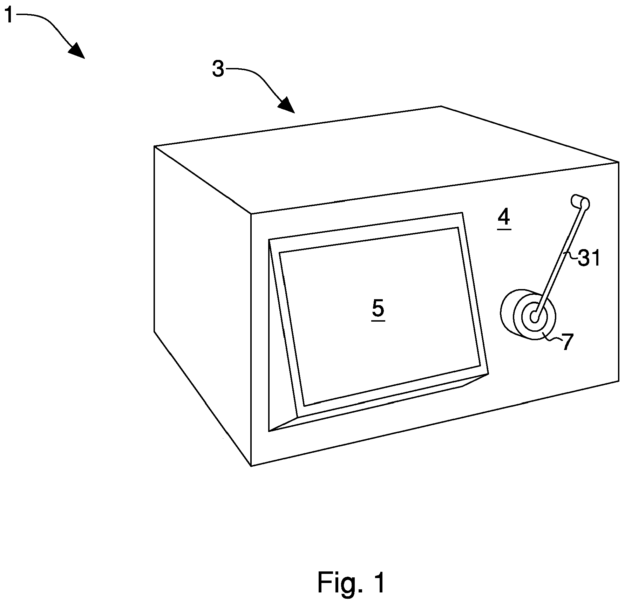

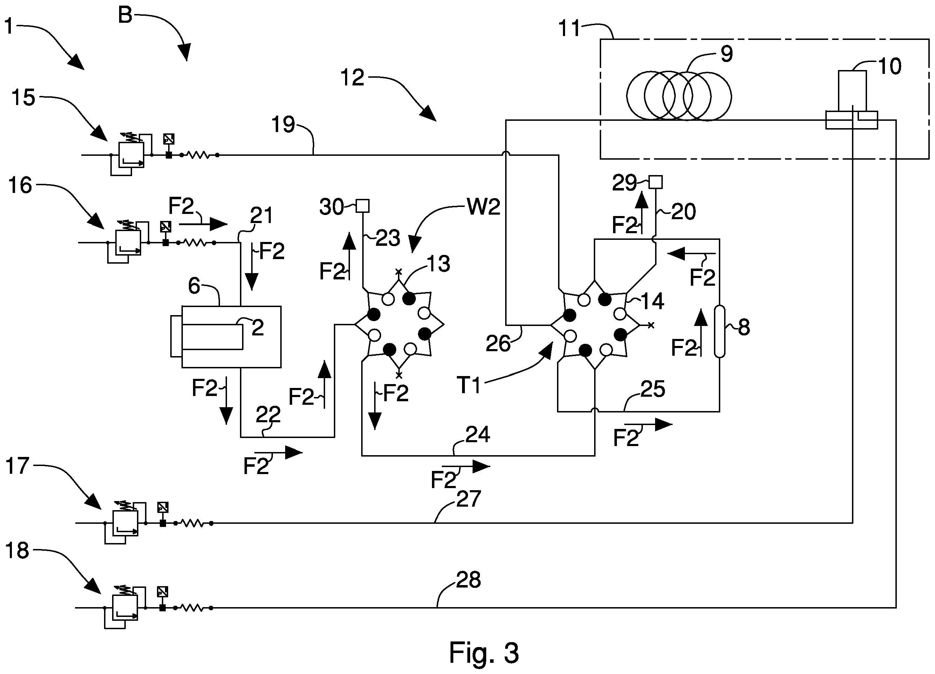

The invention can be better understood and implemented with reference to the attached drawings that illustrate some embodiments thereof by way of non-limiting example, in which:
- Figure 1 is a perspective schematic view of an analyser according to the invention;
- Figures 2-5 are schematic views that show some operating steps of the analyser according to the invention.
With reference to Figures 1-5, there is shown an analyser 1 according to the invention for automatically extracting and detecting benzene and limonene, contained in a sample 2 (Figures 3-5), which is a polymer, a resin in granular form, a preform, or a recycled polyethylene terephthalate (PET) in granular form.

In particular, the sample 2 can be both in the form of a raw material, for example in granular form, or be in the form of a product, for example a preform.

The analyser 1 comprises a box body 3, of parallelpipedon shape.

The box body 3, for example made for metal, is provided with a front panel 4.

On the panel 4 a screen 5 is mounted to display the results of the analysis.

In one embodiment, which is not shown, the screen 5 can be of the touchscreen type so as to constitute an interface between the analyser 1 and an operator.

The analyser 1 can be further provided with or connected to a keyboard, which is not shown, to enable the operator to interface with the analyser 1, and connected to a printer, which is not shown, to print the results of the analysis. Also, the analyser 1 can be further provided with and/or comprise outputs for RS485 and/or Ethernet data transmission that are compatible with the common peripherals used in the process systems.

Also, the analyser 1 comprises a control and management unit, which is not shown, which is housed in the box body 3 and configured for gathering and processing data relating to the analysis and for controlling the components of the analyser 1.

The analyser 1 is further provided with a desorption chamber 6 housed in the box body 3 and accessible via a door 7, obtained on the panel 4 and openable by a lever 31. The desorption chamber 6 is configured, as described better below, for receiving the sample 2 to be analysed and extracting from the sample 2 benzene and limonene.

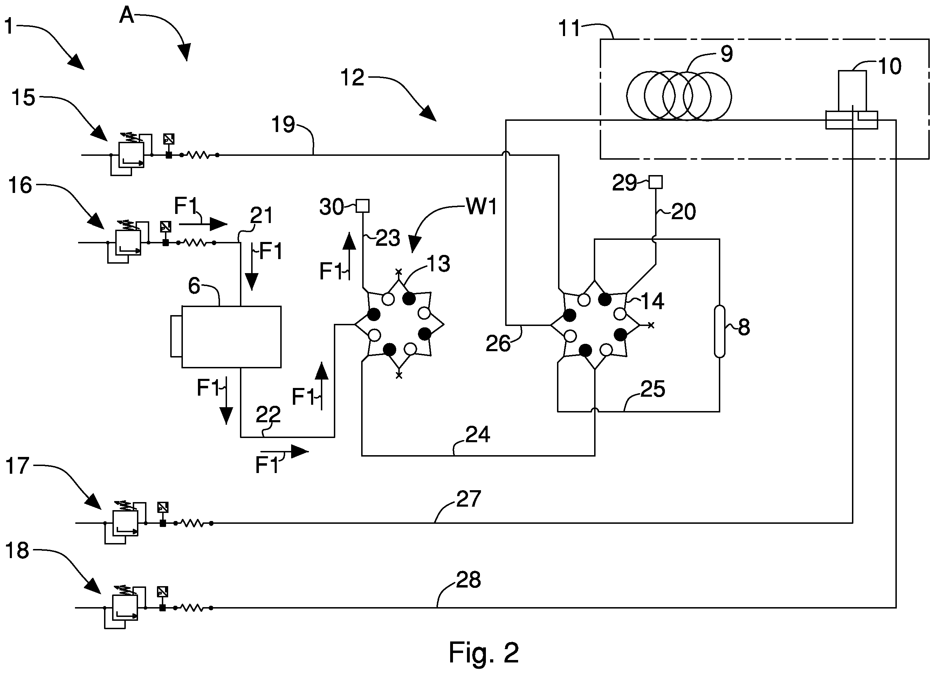

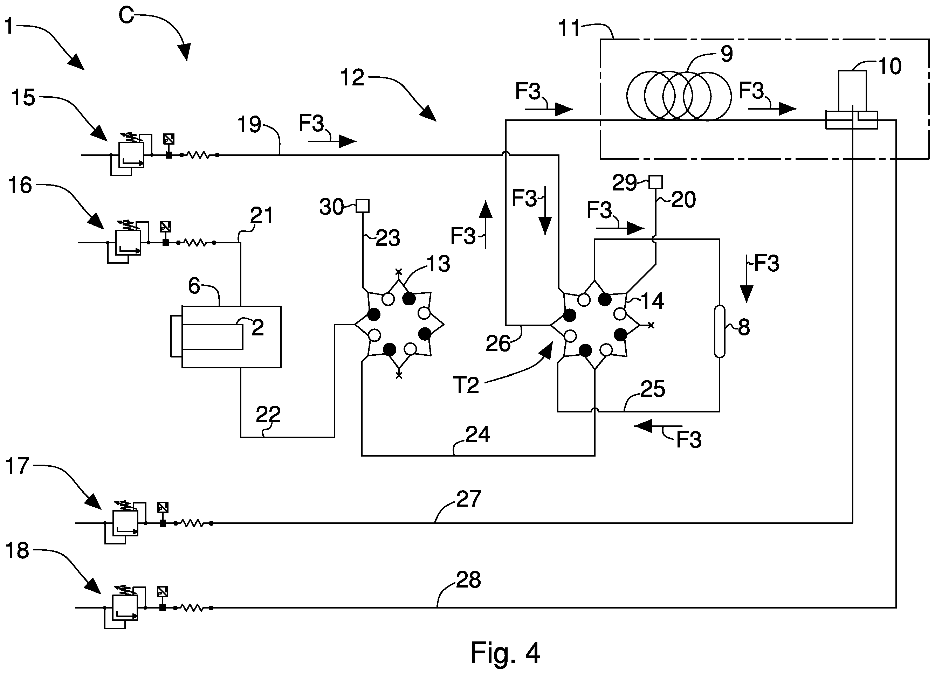

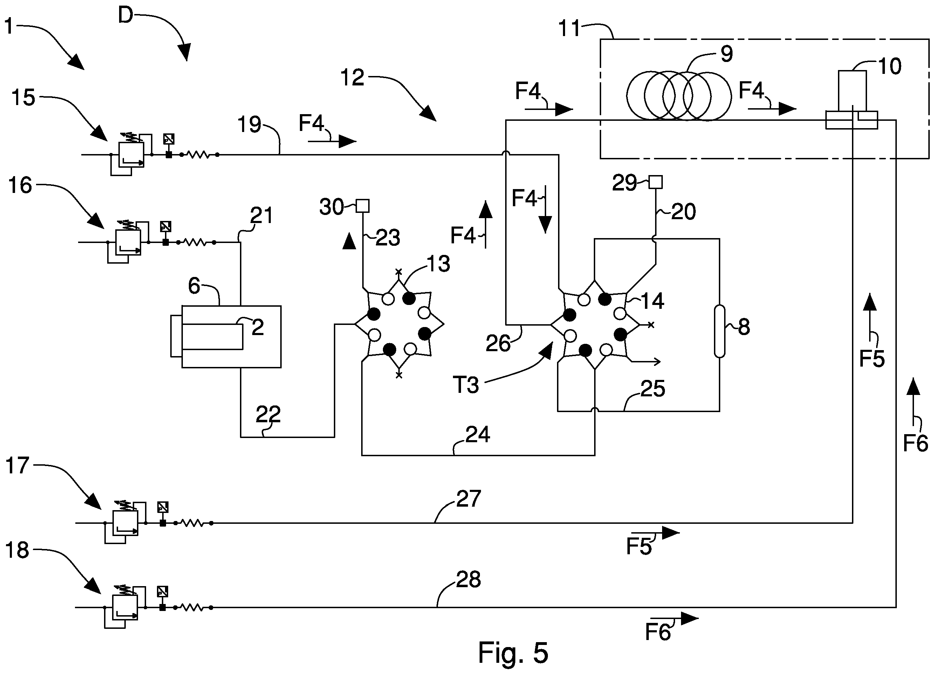

Also, the analyser 1 includes a trap 8 housed in the box body 3 and configured for adsorbing benzene and limonene coming from the desorption chamber 6. The trap 8 comprises a steel tube, which is not shown, in which a porous material has been packed. In use, at ambient temperature, owing to a physical adsorption phenomenon, the benzene and the limonene remain blocked on the surface of the porous material and amass there. Subsequently, following a very rapid heating of the trap 8, carried out by heating means not shown, the trapped benzene and limonene are released, owing to a physical desorption phenomenon, to be sent to a gas chromatography capillary column 9. The trap 8 is configured so as to detect also very low concentrations of benzene and limonene, of the order of a few parts per billion (ppb).
The aforesaid gas chromatography capillary column 9 is optimised for separating benzene and limonene coming from the trap 8 and is housed in the box body 3. The gas chromatography capillary column 9 is configured for separating benzene and limonene found in the sample 2 and providing as output the various peaks of benzene and limonene initially mixed together in the sample 2.
The analyser 1 further comprises a detector 10, in particular a flame ionisation detector (FID), housed in the box body 3, and configured for detecting benzene and limonene coming from the gas chromatography capillary column 9. The operating principle of the detector 10 is based on a measurement of the microcurrent generated by a pair of polarised electrodes that gather the ions produced by the combustion of organic substances in a hydrogen microflame. This microcurrent, directly proportional to the quantity of burned substance, is transformed by an electrometric amplifier, passing through a resistance, into a voltage and amplified by an electrometer. The detector 10 can thus be considered to be a selective detector of the organic carbon inasmuch as the response of the burnt components is directly proportional to the number of carbon atoms found in the molecule (although the possible presence of other elements in the molecule, like oxygen, reduce the response of the component), whereas it has a negligible response to inorganic compounds like carbon dioxide, carbon monoxide and water.
The analyser 1 is further provided with a heated chamber 11 received in the box body 3 and configured for housing the gas chromatography capillary column 9 and the detector 10. In use, the heated chamber 11 maintains the gas chromatography capillary column 9 and the detector 10 at a temperature comprised between 60°C and 120°C, or between 70°C and 110°C, or between 80°C and 100°C, in particular at about 90°C, so as to ensure the stability of the analysis. This temperature is kept uniform inside the chamber 11 owing to a ventilation system, which is not shown, that enables the air to circulate.
The analyser 1 further comprises a first valve 13 and a second valve 14 housed in the box body 3. The first valve 13 and the second valve 14, for example of rotary type, are configured, as described better below, to automatically adjust a flow of fluids flowing into the analyser 1. In particular, the first valve 13 and the second valve 14 comprise internally a pad, which is not shown, and grooves, which are also not shown. In use, depending on the position of the pad in relation to the grooves, it is possible to vary the path of the fluids inside the valve and thus the analyser 1. In one embodiment of the invention, which is not shown, the first valve 13 and/or the second valve 14 are automatic valves equivalent to the rotary valves, for example diaphragm valves.
Also, the analyser 1 comprises a first pressure regulator 15, a second pressure regulator 16, a third pressure regulator 17 and a fourth pressure regulator 18, housed in the box body 3. The first pressure regulator 15, the second pressure regulator 16, the third pressure regulator 17 and the fourth pressure regulator 18 are configured for automatically adjusting the pressures of the fluids flowing into the analyser 1. In particular, each of the pressure regulators 15-18 comprises a proportional solenoid valve and a pressure sensor. Electronics manages the solenoid valve so as to adjust the opening thereof to ensure that outlet pressure detected by the pressure sensor equals set pressure. Downstream of each pressure regulator 15-18 a respective calibrated constriction is further positioned, such calibrated constrictions being housed in the heated chamber 11. In use, by setting a desired pressure it is possible to adjust a flowrate of the fluids that flow into the analyser 1.
The analyser 1 further comprises a pneumatic circuit 12 in which the fluids found in the analyser 1 flow. In particular, the pneumatic circuit 12 comprises a first conduit 19 that connects the first pressure regulator 15 to the second valve 14, a second conduit 20 that connects the second valve 14 to a vent 29, a third conduit 21 that connects the second pressure regulator 16 to the desorption chamber 6, a fourth conduit 22 that connects the desorption chamber 6 to the first valve 13, a fifth conduit 23 that connects the first valve 13 to a vent 30, a sixth conduit 24 that connects the first valve 13 to the second valve 14, a seventh conduit 25 that connects the second valve 14 to the trap 8, the trap 8 being inserted into the seventh conduit 25, an eighth conduit 26 that connects the second valve 14 to the gas chromatography capillary column 9 and to the detector 10, a ninth conduit 27 that connects the third pressure regulator 17 to the detector 10 and a tenth conduit 28 that connects the fourth pressure regulator 18 to the detector 10.
Inside the analyser 1, in particular inside the pneumatic circuit 12, air and hydrogen flow. The air is used to move the first valve 13 and the second valve 14, to wash the desorption chamber 6, to convey benzene and limonene from the desorption chamber 6 to the trap 8 and as a combustive agent for the flame of the detector 10. The air can be supplied by a zero air generator, which is not shown, connected to the analyser 1, or by a cylinder.
The hydrogen is used as a carrier to transfer benzene and limonene released by the trap 8 to the gas chromatography capillary column 9 and from here to the detector 10, and as a fuelling for the flame of the detector 10. The hydrogen can be supplied by a hydrogen generator, which is often more convenient in a process environment, although it requires greater maintenance, or by a cylinder. Hydrogen is chosen as a carrier because it is an inexpensive gas that is already necessary to the analyser 1 to fuel the flame of the detector 10 and because it is possible to produce the hydrogen directly in the process environment by means of a hydrogen generator, thus avoiding the use of a cylinder. It is, however, possible to use other inert gases as carriers, for example helium, provided that certain operating parameters of the analyser 1 are changed, such as the temperature of the heated chamber 11 and the pressure of the carrier.
There is disclosed below the analysis cycle of the analyser 1 with reference to Figures 2 to 5. In a first step A, shown in Figure 2, the desorption chamber 6, devoid of the sample 2, is cleaned by air. In the first step A, the first valve 13 is in a first operating configuration W1 in which the first valve 13 connects the fourth conduit 22 with the fifth conduit 23 which is connected to the vent 30. In this manner, the air, coming from the air generator, or from the cylinder, at a pressure adjusted by the second regulator 16, flows, in the direction indicated by the arrows F1, through the third conduit 21, the desorption chamber 6, cleaning the desorption chamber 6, the fourth conduit 22, the fifth conduit 23 and the vent 30.
In a second step B, shown in Figure 3, in the trap 8 benzene and limonene released by the sample 2 are adsorbed. In particular, in the second step B, the sample 2 is inserted into the desorption chamber 6, which is maintained, by not shown heating means, at a temperature comprised between 150°C and 210°C, or between 160°C and 200°C, or between 170°C and 190°C, in particular at about 180°C, for a time comprised between 20 and 60 minutes, or between 30 and 50 minutes, in particular of about 40 minutes, this promoting the release of benzene and limonene from the sample 2. Further, in the second step B, the desorption chamber 6 is washed continuously by the air, by which all the compounds released by the sample 2 are conveyed to the trap 8, where they are adsorbed. In the second step B, the first valve 13 is in a second operating configuration W2 in which the first valve 13 connects the fourth conduit 22 with the sixth conduit 24, whereas the second valve 14 is in an operating configuration T1 in which the second valve 14 connects the sixth conduit 24 with the seventh conduit 25 and the latter with the second conduit 20 which is connected to the vent 29. In this manner, the air, coming from the air generator, or from the cylinder, at a pressure adjusted by the second regulator 16, flows, in the direction indicated by the arrows F2, through the third conduit 21, the desorption chamber 6, dragging with it the compounds released by the sample 3, the fourth conduit 22, the sixth conduit 24, the seventh conduit 25, and thus through the trap 8, the second conduit 20 and the vent 29. In a third step C, shown in Figure 4, benzene and limonene are sent to the gas chromatography capillary column 9. In particular, in the third step C, the trap 8 is heated, in 1 second, to a temperature greater than 240°C, or greater than 260°C, or greater than 280°C, in particular to about 300°C, to enable benzene and limonene to be desorbed that have accumulated therein, and is washed in countercurrent, with respect to the direction of the flow of benzene and limonene in the second step B, so as to send benzene and limonene desorbed in the gas chromatography capillary column 9 for the chromatographic separation. In the third step C, the second valve 14 is in a further operating configuration T2 in which the second valve 14 connects the first conduit 19 with the seventh conduit 25 and the latter with the eighth conduit 26. In this manner, the hydrogen, coming from the hydrogen generator, or from the cylinder, at a pressure adjusted by the first regulator 15, flows, in the direction indicated by the arrows F3, through the first conduit 19, the seventh conduit 25, and thus through the trap 8, the eighth conduit 26 and the gas chromatography capillary column 9, together with benzene and limonene desorbed by the trap 8.
In a fourth step D, shown in Figure 5, there is provided carrying out the gas chromatography analysis of benzene and limonene that were previously adsorbed in the trap 8 and now found in the gas chromatography capillary column 9. Once the temperature of the heated chamber 11 and the pressure of the carrier have been set, the various peaks are identified univocally on the basis of their retention time, i.e. the time necessary for the individual high boiling component to traverse the gas chromatography capillary column 9, which depends on the interactions of the high boiling component with the stationary phase found in the gas chromatography capillary column 9. The gas chromatography capillary column 9 found in the analyser 1 separates the various high boiling components according to the boiling point thereof. In the fourth step D, the second valve 14 is in another operating configuration T3 in which the second valve 14 connects the first conduit 19 with the eighth conduit 26, thereby excluding the trap 8 from the path of the carrier. In this manner, the hydrogen coming from the hydrogen generator, or from the cylinder, at a pressure adjusted by the first regulator 15, flows, in the direction indicated by the arrows F4, through the first conduit 19, the eighth conduit 26, the gas chromatography capillary column 9 and the detector 10, together with benzene and limonene separated from the gas chromatography capillary column 9. Also, in the fourth step D, the detector 10 is supplied with hydrogen, flowing in the direction indicated by the arrows F5 and coming from the hydrogen generator, or from the cylinder, at a pressure adjusted by the third regulator 17, and with air, flowing in the direction indicated by the arrows F6 and coming from the air generator, or from the cylinder, at a pressure adjusted by the fourth regulator 18.
In use, the analyser 1 is initially calibrated by delivering to the desorption chamber 6 a certified mixture, i.e. a mixture at a known concentration. Subsequently, the operator inserts the sample 2 into the desorption chamber 6 and starts the analyser 1, which operates according to the aforesaid steps A-D. At the end of the analysis cycle, separation of benzene and limonene, the graphic printout and the analysis report are obtained. At the end of the analysis cycle the analyser 1 gets ready in a standby condition.
It should be noted how the analyser 1 and the method according to the invention enable benzene and limonene found in the sample 2 to be extracted and detected automatically.
In particular, the analyser 1 and the method according to the invention do not require the sample 2 to be prepared, this bringing a series of advantages, such as:
- qualified technical staff or staff expert in gas chromatography are not required: the presence of an operator trained in the use of the analyser 1 is in fact sufficient;
- the analyser 1 can be installed directly in a process environment;
- it is possible to carry out a greater number of daily analyses than those carried out in a laboratory according to the prior art; in fact, as the time required to prepare the sample 2 has been eliminated, it is possible to carry out a single analysis in a time below 60 minutes; and
- the results obtained are safer and more repeatable than those obtained in a laboratory according to the prior art because they are no longer subject to human error.
Also, as disclosed above, calibration of the analyser 1 is very fast and simple. In fact, it can be performed by using a certified cylinder or a certified mixture without the need for creating a calibration line.

## Claims

1. Analyser (1) configured for extracting and automatically detecting benzene and limonene contained in a polymer, a resin in granular form, a preform, or a recycled polyethylene terephthalate (PET) in granular form, wherein said analyser (1) comprises a box body (3), said box body (3) houses:
- a desorption chamber (6), configured for receiving said sample (2) and extracting benzene and limonene from said sample (2);
- a trap (8), configured for adsorbing said benzene and limonene coming from said desorption chamber (6);
- heating means for heating said trap (8) to a temperature that is such as to enable said benzene and limonene to be released by said trap (8);
- a gas chromatography capillary column (9), configured for separating said benzene and limonene coming from said trap (8);
- a detector (10) for detecting said benzene and limonene coming from said gas chromatography capillary column (9),
- a chamber (11), wherein the analyser is configured to heat the chamber, which contains said gas chromatography capillary column (9) and said detector (10) and is configured to maintain said gas chromatography capillary column (9) and said detector (10) at a substantially uniform temperature, so as to ensure the stability of an analysis,
- valve means (13, 14) for automatically adjusting a flow of fluids flowing in said analyser (1), and/or pressure adjusting means (15-18) for automatically adjusting pressures of fluids flowing in said analyser (1),
- washing means for washing with air said desorption chamber (6), and/or heating means for heating said desorption chamber (6) to a temperature that is such as to promote the release of said benzene and limonene from said sample (2), and/or conveying means for conveying continuously to said trap (8) said benzene and limonene released by said sample (2) in said desorption chamber (6), and
- a control and management unit for collecting and processing analysis data and for controlling said analyser (1), wherein said box body (3) is provided with a front panel (4) on which there is mounted display means (5) for displaying results of the analysis and/or interface means for enabling an operator to interface with said analyser (1).

2. Analyser (1) according to claim 1, wherein said detector is a flame ionisation detector (10).

3. Analyser (1) according to any preceding claim, further comprising printing means for printing the results of the analysis.

4. Method for extracting and automatically detecting benzene and limonene contained in a polymer, a resin in granular form, a preform, or a recycled polyethylene terephthalate (PET) in granular form, said method comprising:
- installing directly in a process environment an analyser (1) comprising a box body (3) which houses a desorption chamber (6), a trap (8) for benzene and limonene, a gas chromatography capillary column (9), and a detector (10),
- inserting said sample (2) in said desorption chamber (6) and extracting from said sample (2) benzene and limonene via said desorption chamber (6);
- adsorbing said benzene and limonene on said trap (8) for benzene and limonene;
- separating said benzene and limonene coming from said trap (8) in said gas chromatography capillary column (9) that is configured for separating benzene and limonene;
- sending to said detector (10) said benzene and limonene coming from said gas chromatography capillary column (9),
wherein said extracting comprises heating said desorption chamber (6) to a temperature comprised between 150° and 210°C, or between 160° and 200°C, or between 170° and 190°C, in particular to a temperature of about 180°C, for a time comprised between 20 and 60 minutes, or between 30 and 50 minutes, in particular of about 40 minutes, to promote the release from said sample (2) of said benzene and limonene, and continuously transfer to said trap (8) said benzene and limonene released in said desorption chamber (6).

5. Method according to claim 4, and comprising, before said inserting, washing said desorption chamber (6) with air by means of washing means housed in said box body (3).

6. Method according to claim 4, or 5, wherein after said adsorbing there is provided heating said trap (8) by means of heating means housed in said box body (3) to a temperature greater than 240°C, or greater than 260°C, or greater than 280°C, in particular to about 300°C, for a time of about 1 second, so as to release said benzene and limonene from said trap (8) and transfer said benzene and limonene to said gas chromatography capillary column (9).

7. Method according to any one of claims 4 to 6, and comprising maintaining said gas chromatography capillary column (9) and said detector (10) at a substantially uniform temperature comprised between 60°C and 120°C, or between 70°C and 110°C, or between 80°C and 100°C, in particular at about 90°C, so as to ensure the stability of an analysis, by means of a heated chamber (11) housed in said box body (3).

## Patentansprüche

1. Analysator (1), der zum Extrahieren und automatischen Detektieren von Benzol und Limonen, die in einem Polymer, einem Harz in körniger Form, einer Vorform oder einem recycelten Polyethylenterephthalat (PET) in körniger Form enthalten sind, ausgelegt ist, wobei der Analysator (1) einen Kastenkörper (3) umfasst,
wobei der Kastenkörper (3) aufnimmt:
- eine Desorptionskammer (6), die zum Empfangen der Probe (2) und Extrahieren von Benzol und Limonen aus der Probe (2) ausgelegt ist;
- eine Falle (8), die zum Adsorbieren des Benzols und Limonens, die von der Desorptionskammer (6) kommen, ausgelegt ist;
- eine Heizeinrichtung zum Heizen der Falle (8) auf eine Temperatur, die derart ist, dass ermöglicht wird, dass das Benzol und Limonen durch die Falle (8) freigesetzt werden;
- eine Gaschromatographie-Kapillarsäule (9), die zum Trennen des Benzols und Limonens, die von der Falle (8) kommen, ausgelegt ist;
- einen Detektor (10) zum Detektieren des Benzols und Limonens, die von der Gaschromatographie-Kapillarsäule (9) kommen,
- eine Kammer (11), wobei der Analysator dazu ausgelegt ist, die Kammer zu heizen, die die Gaschromatographie-Kapillarsäule (9) und den Detektor (10) enthält, und dazu ausgelegt ist, die Gaschromatographie-Kapillarsäule (9) und den Detektor (10) auf einer im Wesentlichen gleichmäßigen Temperatur zu halten, um die Stabilität einer Analyse sicherzustellen,
- eine Ventileinrichtung (13, 14) zum automatischen Einstellen einer Strömung von Fluiden, die in dem Analysator (1) strömen, und/oder eine Druckeinstelleinrichtung (15-18) zum automatischen Einstellen von Drücken von Fluiden, die in dem Analysator (1) strömen,
- eine Wascheinrichtung zum Waschen der Desorptionskammer (6) mit Luft und/oder eine Heizeinrichtung zum Heizen der Desorptionskammer (6) auf eine Temperatur, die derart ist, dass die Freisetzung des Benzols und Limonens aus der Probe (2) gefördert wird, und/oder eine Fördereinrichtung zum kontinuierlichen Befördern des Benzols und/oder Limonens, die aus der Probe (2) in der Desorptionskammer (6) freigesetzt werden, zur Falle (8),
- eine Steuer- und Managementeinheit zum Sammeln und Verarbeiten von Analysedaten und zum Steuern des Analysators (1), wobei der Kastenkörper (3) mit einer vorderen Platte (4) versehen ist, an der eine Anzeigeeinrichtung (5) zum Anzeigen von Ergebnissen der Analyse und/oder eine Schnittstelleneinrichtung zum Ermöglichen, dass eine Bedienperson mit dem Analysator (1) über eine Schnittstelle koppelt, montiert sind.

2. Analysator (1) nach Anspruch 1, wobei der Detektor ein Flammenionisationsdetektor (10) ist.

3. Analysator (1) nach einem vorangehenden Anspruch, der ferner eine Druckeinrichtung zum Drucken der Ergebnisse der Analyse umfasst.

4. Verfahren zum Extrahieren und automatischen Detektieren von Benzol und Limonen, die in einem Polymer, einem Harz in körniger Form, einer Vorform oder einem recycelten Polyethylenterephthalat (PET) in körniger Form enthalten sind, wobei das Verfahren umfasst:
- direktes Installieren eines Analysators (1) mit einem Kastenkörper (3), der eine Desorptionskammer (6), eine Falle (8) für Benzol und Limonen, eine Gaschromatographie-Kapillarsäule (9) und einen Detektor (10) aufnimmt, in einer Prozessumgebung,
- Einführen der Probe (2) in die Desorptionskammer (6) und Extrahieren von Benzol und Limonen aus der Probe (2) über die Desorptionskammer (6);
- Adsorbieren des Benzols und Limonens an der Falle (8) für Benzol und Limonen;
- Trennen des Benzols und Limonens, die von der Falle (8) kommen, in der Gaschromatographie-Kapillarsäule (9), die zum Trennen von Benzol und Limonen ausgelegt ist;
- Schicken des Benzols und Limonens, die von der Gaschromatographie-Kapillarsäule (9) kommen, zu dem Detektor (10), wobei das Extrahieren das Heizen der Desorptionskammer (6) auf eine Temperatur zwischen 150 ° und 210 °C oder zwischen 160 ° und 200 °C oder zwischen 170 ° und 190 °C, insbesondere auf eine Temperatur von etwa 180 °C, für eine Zeit zwischen 20 und 60 Minuten oder zwischen 30 und 50 Minuten, insbesondere von etwa 40 Minuten, umfasst, um die Freisetzung des Benzols und Limonens aus der Probe (2) zu fördern und das in der Desorptionskammer (6) freigesetzte Benzol und Limonen kontinuierlich zu der Falle (8) zu überführen.

5. Verfahren nach Anspruch 4, das vor dem Einführen das Waschen der Desorptionskammer (6) mit Luft mittels einer im Kastenkörper (3) aufgenommenen Wascheinrichtung umfasst.

6. Verfahren nach Anspruch 4 oder 5, wobei nach dem Adsorbieren das Heizen der Falle (8) mittels einer Heizeinrichtung, die im Kastenkörper (3) aufgenommen ist, auf eine Temperatur, die größer als 240 °C oder größer als 260 °C oder größer als 280 °C ist, insbesondere auf etwa 300 °C, für eine Zeit von etwa 1 Sekunde vorgesehen ist, um das Benzol und Limonen aus der Falle (8) freizusetzen und das Benzol und Limonen zur Gaschromatographie-Kapillarsäule (9) zu überführen.

7. Verfahren nach einem der Ansprüche 4 bis 6, das das Halten der Gaschromatographie-Kapillarsäule (9) und des Detektors (10) auf einer im Wesentlichen gleichmäßigen Temperatur zwischen 60 °C und 120 °C oder zwischen 70 °C und 110 °C oder zwischen 80 °C und 100 °C, insbesondere auf etwa 90 °C, um die Stabilität einer Analyse sicherzustellen, mittels einer geheizten Kammer (11), die in dem Kastenkörper (3) aufgenommen ist, umfasst.

## Revendications

1. Analyseur (1) configuré pour l'extraction et la détection automatique de benzène et de limonène contenus dans un polymère, une résine en forme granuleuse, une préforme ou un polyéthylène téréphtalate (PET) recyclé en forme granuleuse, dans lequel ledit analyseur (1) comprend un corps de boîtier (3),
ledit corps de boîtier (3) loge :
- une chambre de désorption (6) configurée pour recevoir ledit échantillon (2) et extraire du benzène et du limonène dudit échantillon (2) ;
- un piège (8) configuré pour adsorber lesdits benzène et limonène provenant de ladite chambre de désorption (6) ;
- des moyens de chauffage pour chauffer ledit piège (8) à une température qui est propre à permettre auxdits benzène et limonène d'être libérés par ledit piège (8) ;
- une colonne capillaire pour chromatographie en phase gazeuse (9) configurée pour séparer lesdits benzène et limonène provenant du piège (8) ;
- un détecteur (10) pour détecter lesdits benzène et limonène provenant de ladite colonne capillaire pour chromatographie en phase gazeuse (9),
- une chambre (11), dans lequel l'analyseur est configuré pour chauffer la chambre, qui contient la colonne capillaire pour chromatographie en phase gazeuse (9) et ledit détecteur (10), et est configuré pour maintenir ladite colonne capillaire pour chromatographie en phase gazeuse (9) et ledit détecteur (10) à une température sensiblement uniforme, de manière à assurer la stabilité d'une analyse,
- des moyens formant vanne (13, 14) pour régler automatiquement un écoulement de fluides coulant dans ledit analyseur (1), et/ou des moyens de réglage de pression (15-18) pour régler automatiquement des pressions de fluides coulant dans ledit analyseur (1),
- des moyens de lavage pour laver avec de l'air ladite chambre de désorption (6), et/ou des moyens de chauffage pour chauffer ladite chambre de désorption (6) à une température qui est propre à favoriser la libération desdits benzène et limonène dudit échantillon (2), et/ou des moyens de transport pour transporter de manière continue jusqu'au piège (8) lesdits benzène et limonène libérés par ledit échantillon (2) dans ladite chambre de désorption (6),
- une unité de commande et de gestion pour recueillir et traiter des données d'analyse et pour commander ledit analyseur (1), dans lequel ledit corps de boîtier (3) est pourvu d'un panneau avant (4) sur lequel sont montés des moyens d'affichage (5) pour afficher les résultats de l'analyse et/ou des moyens d'interface pour permettre à un opérateur d'interfacer avec ledit analyseur (1).

2. Analyseur (1) selon la revendication 1, dans lequel ledit détecteur est un détecteur à ionisation de flamme (10).

3. Analyseur (1) selon l'une quelconque des revendications précédentes, comprenant également des moyens d'impression pour imprimer les résultats de l'analyse.

4. Procédé pour l'extraction et la détection automatique de benzène et de limonène contenus dans un polymère, une résine en forme granuleuse, une préforme ou un polyéthylène téréphtalate (PET) recyclé en forme granuleuse, ledit procédé comprenant :
- l'installation, directement dans un environnement de traitement, d'un analyseur (1) comprenant un corps de boîtier (3) qui loge une chambre de désorption (6), un piège (8) pour le benzène et le limonène, une colonne capillaire pour chromatographie en phase gazeuse (9) et un détecteur (10) ;
- l'insertion dudit échantillon (2) dans ladite chambre de désorption (6) et l'extraction du benzène et du limonène dudit échantillon (2) via ladite chambre de désorption (6) ;
- l'adsorption desdits benzène et limonène sur ledit piège (8) pour le benzène et le limonène ;
- la séparation desdits benzène et limonène provenant dudit piège (8) dans ladite colonne capillaire pour chromatographie en phase gazeuse (9) qui est configurée pour séparer le benzène et le limonène ;
- l'envoi audit détecteur (10) desdits benzène et limonène provenant de ladite colonne capillaire pour chromatographie en phase gazeuse (9),
dans lequel ladite extraction comprend le chauffage de ladite chambre de désorption (6) à une température comprise entre 150° et 210°C, ou entre 160° et 200°C, ou entre 170° et 190°, en particulier à une température d'environ 180°C, pendant une durée comprise entre 20 et 60 minutes, ou entre 30 et 50 minutes, en particulier d'environ 40 minutes, pour favoriser la libération desdits benzène et limonène dudit échantillon (2) et transférer de manière continue jusqu'audit piège (8) lesdits benzène et limonène libérés par ledit échantillon (2) dans ladite chambre de désorption (6).

5. Procédé selon la revendication 4, et comprenant, avant ladite insertion, le lavage de ladite chambre de désorption (6) avec de l'air à l'aide de moyens de lavage logés dans ledit corps de boîtier (3).

6. Procédé selon la revendication 4 ou 5, et dans lequel après ladite adsorption on prévoit de chauffer ledit piège (8) à l'aide de moyens de chauffage logés dans ledit corps de boîtier (3) à une température supérieure à 240°C ou supérieure à 260°C ou supérieure à 280°C, en particulier à environ 300°C, pendant une durée d'environ 1 seconde, de manière à libérer lesdits benzène et limonène du piège (8) et à transférer lesdits benzène et limonène dans ladite colonne capillaire pour chromatographie en phase gazeuse (9).

7. Procédé selon l'une quelconque des revendications 4 à 6, et comprenant le maintien de ladite colonne capillaire pour chromatographie en phase gazeuse (9) et dudit détecteur (10) à une température sensiblement uniforme comprise entre 60° et 120°C, ou entre 70° et 110°C, ou entre 80° et 100°, en particulier à une température d'environ 90°C, de manière à assurer la stabilité d'une analyse, à l'aide d'une chambre (11) chauffée logée dans ledit corps de boîtier (3).
